# EUROPEAN PATENT SPECIFICATION

(11) **EP 3 797 966 B1**
(45) Date of publication and mention of the grant of the patent: **23.08.2023**
(21) Application number: 20198818.5
(22) Date of filing: 28.09.2020
(51) Int. Cl.: B29C 45/38, B29C 45/27

(54) **DEVICE FOR AUTOMATICALLY TRIMMING INJECTION GATES AND OPERATING METHOD**
VORRICHTUNG ZUM AUTOMATISCHEN BESCHNEIDEN VON ANSPRITZANSCHNITTEN UND VERFAHREN
DISPOSITIF D'AJUSTAGE AUTOMATIQUE DE PORTES D'INJECTION ET PROCÉDÉ DE FONCTIONNEMENT

(30) Priority: 26.09.2019 PT 2019115798
(43) Date of publication of application: 31.03.2021
(73) Proprietor: Simoldes Plásticos, SA, Oliveira de Azeméis, 3721-902 Santiago de Riba-UL (PT)
(72) Inventor: DE OLIVEIRA AZENHA, Manuel Joaquim, Oliveira de Azeméis, 3721-902 Santiago de Riba-UL (PT)
(74) Representative: Patentree

(56) References cited:
- DE-A1-102009 012 287
- JP-A- 2015 131 454

## Description

### TECHNICAL FIELD

The present disclosure relates to the field of injection moulding, in particular to a device for trimming injection gates.

### BACKGROUND

Injection moulding, specifically plastic injection moulding has been the preferred process for manufacturing plastic parts. Advantages include higher tolerance precision, lower labour costs and a lesser need to finish parts after moulding. Disadvantages of injection moulding are for example process limitations.

The injection moulding cycle usually involves injecting molten polymer through a channel, normally heated. The molten polymer flows through channels, called runners, and enters a mould cavity through a runner and gate inlet. The mould remains in the mould cavity at a set temperature to allow the polymer to solidify. Once the mould cavity is filled, a holding pressure is usually maintained to ensure adequate moulding and/or compensate for material shrinkage. This is referred to as the pack/hold phase of the cycle. Pressure must be maintained on the material until the gate solidifies to prevent material from flowing back out of the cavity. Once the mould is sufficiently cooled, the mould opens and the hardened moulded product is ejected.

Injection moulding processes are subject to material stress. When a polymer is melted, the molecular bonds are temporarily broken due to the heat and shear force of the extruder thus allowing the molecules to flow. As the polymer cools and the molecular bonds re-link the polymer into its rigid form, unequal distribution of stresses can cause warpage, sink marks, cracking, premature failure and other problems.

Each injection mould design has a gate that allows the molten polymer to be injected into the mould cavity. Gate type, design and location can affect part packing, gate removal or vestige, cosmetic appearance, dimensions and warping. There can be mentioned two current types of gates: manually trimmed gates and automatically trimmed gates.

Manually trimmed gates require an operator to separate the mould manually after each cycle. Manually trimmed gates have advantages for shear-sensitive materials which cannot be exposed to high shear rates. However, such gate designs are laborious and not cost effective.

Automatically trimmed gates incorporate tools for cutting or trimming the gates when the mould opens to eject the solidified mould. Automatically trimmed gates avoid the need for a secondary operation thus reducing cost. It also minimises gate scars.

Despite these advantages, there are disadvantages in the current automatically trimmed gates. Specifically, the prior art designs are complex, not easily reused on different moulds, all contributing to cost and practical complications, for example involving multiple movements, in the mould design, construction and operation.

Document CN101733904A discloses a mould inner gate arranged for automatically cutting off an injection mould. The automatic in-mould edge gate cutting injection mould wherein the gate cutting device comprises a plurality of cutters, a separation inhibiting device and a mould separating damper.

In document CN101733904A, the mould opening force of an injection machine is used for cutting off a gate runner in the process of mould opening. The cutters exhibit shearing movements opposite to the edge gate through the spring force at the bottom of the cutters.

Documents DE 10 2009 012287 A1 and JP 2015 131454 A disclose a device for automatically trimming an injection moulding gate of a moulded product being obtained by injection moulding in a mould.

Document CN203046155U discloses a cutoff-type injection mould. The cutoff-type injection mould comprises a top cover at upper end, a fixed die and a dynamic die at the lower end of the top cover, and a base structure at bottom, wherein the fixed die and the dynamic die are vertically arranged in correspondence; a groove is arranged in the lower end of the fixed die; a mould pressing groove is arranged in the groove; a mould pressing plate is arranged in the upper end of the dynamic die; the mould pressing groove and the mould pressing plate are oppositely arranged; a plurality of inclined ejector pins are connected at the lower end of the mould pressing plate, and the inclined ejector pins are connected onto a surface pin plate through a sliding wheel; and a plurality of cutters are arranged at two sides of the mould pressing groove.

Document DE4033297A1 discloses a mould for injection moulding of plastics, which has on one of the two halves of the mould a frame. This urges during the closure of the mould web of foil through a mask in the second half of the mould. The frame can slide from a protruding to a flush fitting position in the first half of the mould due to a spiral spring. Cutters to trim the web are fitted to the first half of the mould.

There is thus a need for a device for automatically trimming injection gates for which the design is not complex, easily reused on different moulds, reducing costs and practical complications (e.g. avoiding multiple movements) in the mould design, construction and operation.

These facts are disclosed in order to illustrate the technical problem addressed by the present disclosure.

### GENERAL DESCRIPTION

The present disclosure relates to a device for trimming, i.e. cutting, injection mould gates, operating automatically, i.e. without manual operation.

Gate type, design and location can affect part packing, gate removal or vestige, cosmetic appearance, dimensions and warping. There are two types of gates which can be mentioned in the present context: manually trimmed gates and automatically trimmed gates.

Manually trimmed gates require a human operator to separate the moulded gate material manually from the moulded product after each cycle. Manually trimmed gates have advantages for shear-sensitive materials which cannot be exposed to high shear rates. However, such gate designs are laborious and not cost effective.

Automatically trimmed gates incorporate tools for cutting or trimming the gates when the mould opens to eject the solidified moulded product. Automatically trimmed gates avoid the need for a secondary operation thus reducing cost. It also minimises gate scars. Despite these advantages, there are disadvantages in the current automatically trimmed gates. Specifically, the designs are complex, not easily reused on different moulds and/or involve multiple movements, all contributing to cost and practical complications in the mould design, construction and operation.

The invention is set out in the appended set of claims. The present disclosure describes a device for automatically trimming injection gates. The disclosure also describes a method for operating the device for automatically trimming injection gates. The obtained moulded product shows a gate trimming surface that is less strained or less scarred that prior art moulded products.

It is disclosed a device for automatically trimming an injection moulding gate of a moulded product being obtained by injection moulding in a mould, as a result of injecting melted injection material through an opening in said mould, comprising:
a casing for attaching to the mould;
a blade for trimming the gate, arranged to move substantially perpendicularly to the direction of melted material injection of said opening;
a feeding slider comprising a runner inlet forming a channel in said feeding slider;
wherein the blade is movable from an injection position away from the opening to a cutting position, cutting the gate, and closing the opening;
wherein the feeding slider is movable from an injection position, arranged against the mould opening such that the runner inlet establishes a fluid-tight channel into the mould, to a cutting position, arranged to hold the blade against the mould opening to maintain holding pressure by the blade.

In an embodiment, the feeding slider is arranged to move substantially in parallel to the direction of melted material injection of said opening.

In an embodiment, the blade and the feeding slider cooperate by way of respective cooperating sloped surfaces.

In an embodiment, the blade is arranged to move perpendicularly to the feeding slider.

An embodiment comprises a locking bar movable from an injection position, held as a wedge between the casing and the feeding slider to lock the feeding slider in position arranged against the mould opening such that the runner inlet establishes a fluid-tight channel into the mould, to a cutting position, unlocking the feeding slider to move away from the opening and holding feeding slider to hold the blade against the mould opening to maintain holding pressure by the blade.

In an embodiment, the feeding slider and the locking bar cooperate by way of respective cooperating sloped surfaces.

In an embodiment, the movable locking bar is arranged to arranged to move in parallel and in reciprocal motion to the blade.

An embodiment comprises an actuator for moving the blade from the injecting position into the cutting position.

An embodiment comprises a hydraulic cylinder and a piston for moving the blade from the injecting position into the cutting position.

In an embodiment, the hydraulic cylinder and a piston are further arranged for moving the blade from the injecting position into the cutting position.

An embodiment comprises a gear meshing with the blade and the feeding slider to synchronise movement of the blade and the feeding slider.

In an embodiment, the gear meshes with the blade, the feeding slider and the locking bar, to synchronise movement of the blade, the feeding slider and the locking bar.

An embodiment comprises a gear meshing with the blade and locking bar, but not the feeding slider, to synchronise movement of the blade and the locking bar.

An embodiment comprises a further hydraulic cylinder and a piston arranged to move the locking bar.

In an embodiment, its parts are arranged to be movable bi-directionally between the injecting position and the cutting position.

It is also disclosed a method of operating a device for automatically trimming an injection moulding gate according to any of the disclosed embodiments, comprising the steps of:
previously, arranging the device against a mould opening and arranging a feeding channel into the runner inlet of the feeding slider, wherein the blade is moved away from the mould opening, and simultaneously, or previously, the feeding slider is moved against the mould opening, such that the runner inlet establishes a fluid-tight channel from the feeding channel through the mould opening and into the mould;
injecting melted polymer into the mould cavity via the runner inlet of the feeding slider;
optionally, allowing injecting pressure to ease to a lower pressure than the injection pressure;
moving the blade into cutting position, and simultaneously, or previously, moving the feeding slider from the mould opening, such that the feeding slider holds the blade against the mould opening, and thus maintaining holding pressure until the moulded product solidifies;
optionally, returning to injection pressure, if the pressure was previously eased from the injection pressure;
allowing the mould to cool and the moulded product to solidify;
opening the mould and extracting the moulded product.

In an embodiment, the blade is moved into the cutting position when the product has partially solidified such that the blade movement is not impaired, but the melted material pressure has reduced due to the partial solidifying, such that the risk of leakage is reduced.

It is also disclosed a moulded product obtained by the method according to the disclosed embodiments.

### BRIEF DESCRIPTION OF THE DRAWINGS

The following figures provide preferred embodiments for illustrating the disclosure and should not be seen as limiting the scope of invention.
**Figure 1****:** Schematic representation of a cross-section of an embodiment of the device for automatically trimming injection gates in (a) injecting position and (b) cutting position.
**Figure 2****:** Schematic representation of a cross-section of an embodiment of the device for automatically trimming injection gates in (a) injecting position and (b) cutting position.
**Figure 3****:** Schematic representation of a cross-section of an embodiment of the device for automatically trimming injection gates in (a) injecting position and (b) cutting position.
**Figure 4****:** Schematic representation of a cross-section of two embodiments, in injecting position, of the device for automatically trimming injection gates.

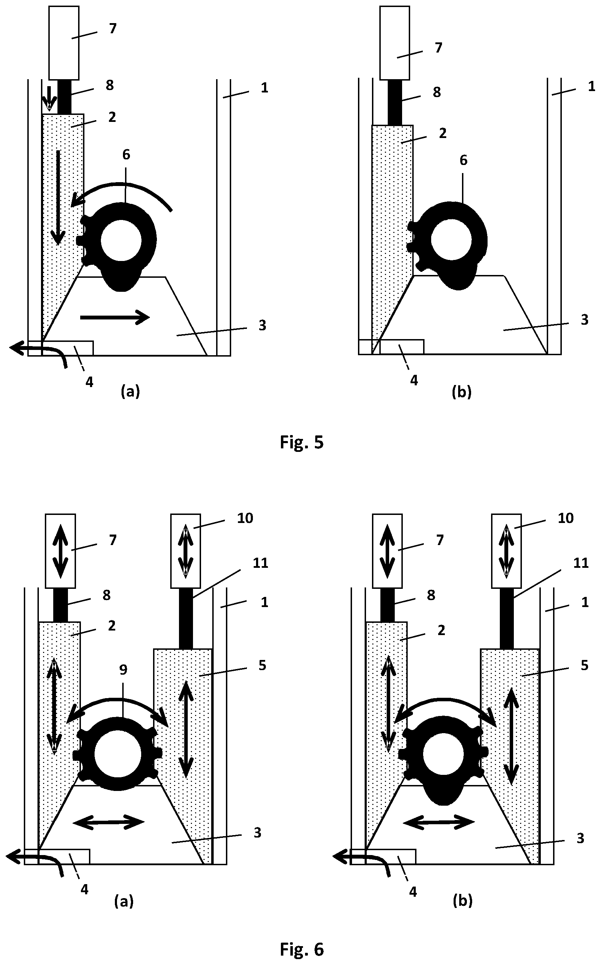

**Figure 5****:** Schematic representation of a cross-section of an embodiment of the device for automatically trimming injection gates in (a) injecting position and (b) cutting position.
**Figure 6****:** Schematic representation of a cross-section of two embodiments, in injecting position, of the device for automatically trimming injection gates.
**Figure 7****:** Schematic representation of a cross-section of an embodiment of the device for automatically trimming injection gates placed in an injection mould - injection position.
**Figure 8****:** Schematic representation of a cross-section of an embodiment of the device for automatically trimming injection gates placed in an injection mould - the injection is closed, and the blade is the cutting position.
**Figure 9****:** Schematic representation of a cross-section of an embodiment of the device for automatically trimming injection gates placed in an injection mould - the ejection of the part is done, and part and runner are separated.

### DETAILED DESCRIPTION

This disclosure relates to a device for automatically trimming injection gates. This disclosure further relates to movement mechanisms for the device for automatically trimming injection gates.

One of the main limitations of the injection moulding process is due to material stress. When a polymer is melted, the molecular bonds are temporarily broken due to the heat and shear force of the extruder thus allowing the molecules to flow. As the polymer cools and the molecular bonds re-link the polymer into its rigid form, unequal distribution of stresses can cause warpage, sink marks, cracking, premature failure and other problems.

Each injection mould design has a gate that allows the molten polymer to be injected into the mould cavity. Gate type, design and location can affect part packing, gate removal or vestige, cosmetic appearance, dimensions and warping. There are currently two types of gates: manually trimmed gates and automatically trimmed gates.

Manually trimmed gates require an operator to separate the mould manually after each cycle. Manually trimmed gates are advantages for shear-sensitive materials which cannot be exposed to high shear rates. However, such gate designs are laborious and not cost effective.

Automatically trimmed gates incorporate tools for cutting or trimming the gates when the mould opens to eject the solidified moulded product. Automatically trimmed gates avoid the need for a secondary operation thus reducing cost. It also minimises gate scars. Despite these advantages, there are disadvantages in the current automatically trimmed gates. Specifically, the prior art designs are complex, not easily reused on different moulds, all contributing to cost and practical complications, for example involving multiple movements, in the mould design, construction and operation. Also, scars remain visible even when minimised with prior art methods.

The present disclosure describes an improved automatically trimmed gate system. This disclosed device is less complex, easily reused on different moulds, reducing cost and practical complications, involving a single movement.

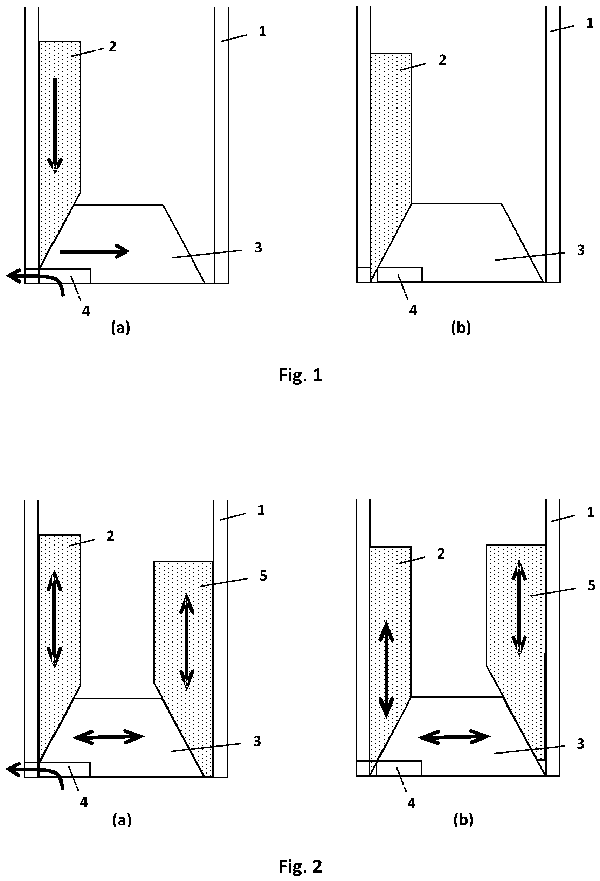

**Figure 1(a)** illustrates the cross-section of an embodiment of the injection gate trimming device comprising a casing **1** which encloses a blade **2** for trimming the gate, a movable feeding slider **3** and a runner inlet **4** forming a channel in said feeding slider. The movable feeding slider **3** is arranged flush against the interior of the casing **1,** proximal to the mould such that the runner inlet **4** establishes a fluid-tight channel into the mould. The blade **2** is elevated, arranged parallel to the interior of the casing and perpendicular to the movable feeding slider **3.** Melted polymer can be injected into the moulding cavity via the runner inlet **4.** When the cutting device is activated to cut the mould gate, the blade **2** is lowered, simultaneously cutting the gate and closing the mould opening, and the movable feeding slider **3** is shifted to its distant position as illustrated in **Figure 1(b)****.** The movable feeding slider **3,** by way of cooperating sloped surfaces in the blade **2** and the slider **3,** holds the blade **2** against the mould opening, and thus maintaining holding pressure until the moulded product solidifies. In particular, the feeding slider **3** is held against the blade **2** by the casing **1,** as the casing **1** prevents the slider from moving further away from the mould opening, and thus maintaining holding pressure until the moulded product solidifies.

**Figure 2(a)** illustrates the cross-section of an embodiment of the injection gate trimming device comprising a casing **1** which encloses a blade **2** for trimming the gate, a movable feeding slider **3,** a runner inlet **4** forming a channel in said slider, and a movable locking bar **5.** The movable feeding slider **3** is arranged flush against the interior of the casing **1,** proximal to the mould such that the runner inlet **4** establishes a fluid-tight channel into the mould. The blade **2** is elevated, arranged parallel to the interior of the casing and perpendicular to the movable feeding slider **3** movement. Melted polymer can be injected into the moulding cavity via the runner inlet **4.** When the cutting device is activated to cut the mould gate, the blade **2** is lowered, simultaneously cutting the gate and closing the mould opening, and the movable feeding slider **3** is shifted to its distant position as illustrated in **Figure 1(b)****.**

The movable feeding slider **3,** by way of as cooperating sloped surfaces in the blade **2** and the slider **3,** holds the blade **2** against the mould opening. In particular, the feeding slider **3** is held against the blade **2** by the casing **1,** as the casing **1** prevents the slider from moving further. The movable locking bar **5,** functioning as a locking mechanism, can be lowered, parallel to the interior of the casing and perpendicular to the movable feeding slider **3.** The movable locking bar **5** cooperates with the movable feeding slider **3** by way of respective cooperating sloped surfaces. In its lowered position, the movable locking bar **5** locks the movable feeding slider in its injecting position (a). When the cutting device is activated to cut the mould, the blade **2** is lowered, the movable feeding slider **3** is moved away from the mould opening and, the movable locking bar **5** is elevated as illustrated in **Figure 2(b)****.**

In this way, two locking mechanisms are obtained. A first locking mechanism, in the injecting position (a), is obtained by the locking bar **5** being held, as wedge, between the casing **1** and the feeding slider **3** to maintain holding pressure of the feeding slider **3** against the mould opening during injection. This is advantageous for higher injection pressures. A second locking mechanism, in the cutting position (b), is obtained by the feeding slider **3** when held against the blade **2** by the casing **1,** as the casing **1** prevents the slider from moving further away from the mould opening and thus maintain holding pressure until the moulded product solidifies.

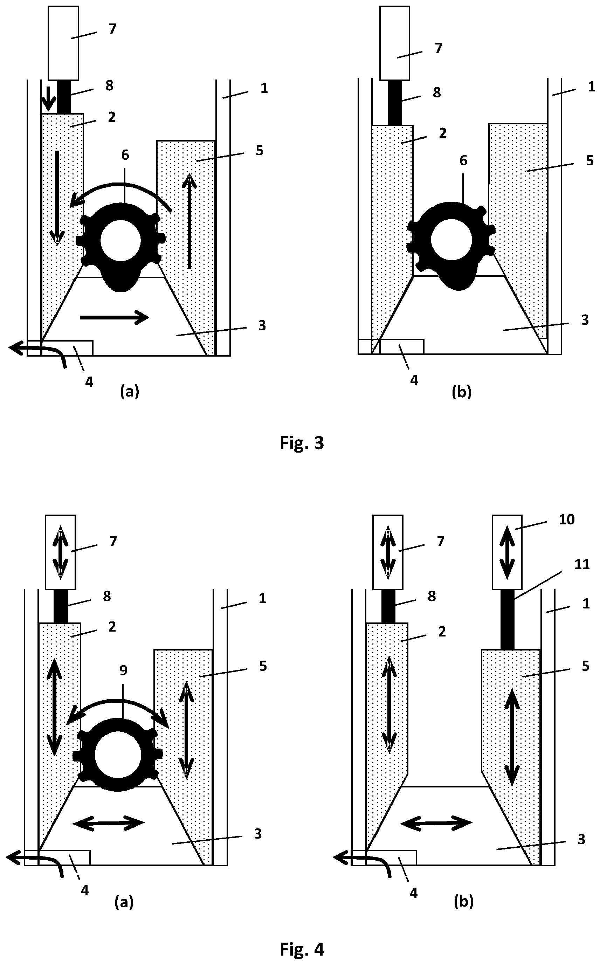

**Figure 3** illustrates the cross-section of an embodiment of the injection gate trimming device in (a) injecting position and (b) cutting position. In this embodiment, a hydraulic cylinder **7** and a piston **8** are used to move the blade **2.** The feeding slider **3** may be moved from the injecting position to the cutting position by way of the cooperating sloped surfaces of the blade **2** and the feeding slider **3.** The locking bar **5** may also be moved from the injecting position to the cutting position by way of the cooperating sloped surfaces of the feeding slider **3** and the locking bar **5.** This requires that the sloped surface angles are adjusted so that the mechanism moves adequately.

Preferably, a gear **6** may be used, i.e. a toothed wheel, meshing with corresponding holes in two or more of the blade **2,** feeding slider **3** and locking bar **5** to facilitate simultaneous movement of the these parts. In particular, the gear **6** may comprise multiple teeth for meshing with the blade **2** or locking bar **5.** In particular, the gear **6** may comprise a single curved tooth for meshing with the feeding slider **3.** The gear **6** rotates anti-clockwise when moving from the (a) injecting position into the (b) cutting position, and vice-versa.

**Figure 4(a)** illustrates an alternative gear **9.** The alternative gear **9** meshes with the blade **2** and locking bar **5,** but not the feeding slider **3.** This is advantageous in being a simpler mechanism, but requires the sloped surface angles to be adjusted so that the mechanism moves adequately.

**Figure 4(b)** illustrates the cross-section of an embodiment of the injection gate trimming device in (a) injecting position and (b) cutting position, with an alternative actuating mechanism. A second hydraulic cylinder **10** and a second piston **11** are arranged to move the locking bar **5.** The feeding slider **3** may be moved from the injecting position to the cutting position by way of the cooperating sloped surfaces of the blade **2** and the feeding slider **3.** The feeding slider **3** may also be moved from the cutting position to the injecting position by way of the cooperating sloped surfaces of the feeding slider **3** and the locking bar **5.**

The disclosed embodiments can move bi-directionally between the (a) injecting position and the (b) cutting position.

In one embodiment, a method for operating the injection gate trimming device, comprises the following steps:
1. previously, arranging the device against a mould opening and arranging a feeding channel into the runner inlet **4** of the feeding slider **3**;
2. moving the blade **2** away from the mould opening;
3. moving the feeding slider **3** against the mould opening, such that the runner inlet **4** establishes a fluid-tight channel from the feeding channel through the mould opening and into the mould;
4. injecting melted polymer into the mould cavity via the runner inlet **4** of the feeding slider **3**;
5. optionally, allowing injecting pressure to ease to a lower pressure than the injection pressure;
6. moving the blade **2** into cutting position;
7. moving the feeding slider **3** from the mould opening, such that it holds the blade **2** against the mould opening, and thus maintaining holding pressure until the moulded product solidifies;
8. optionally, returning to injection pressure, if the pressure was previously eased from the injection pressure;
9. allowing the mould to cool and the moulded product to solidify;
10. opening the mould and extracting the moulded product.

Note that steps 2 and 3 are preferably carried out simultaneously by way of the disclosed mechanism. Note that steps 6 and 7 are preferably carried out simultaneously by way of the disclosed mechanism. Note that step 1 may be carried out before, during, or after steps 2 and 3.

Subsequently, the mould and the injection gate trimming device may be prepared for a new injection process. The movement is then reversed, which comprises moving the blade **2** away from the mould opening and moving the feeding slider **3** against the mould opening, such that the runner inlet **4** establishes a fluid-tight channel from the feeding channel through the mould opening and into the mould. This subsequent movement for device preparation for a new injection may be carried out between steps 9 and 10. Note that in step 9, the moulded product does need to be completely solidified before the reverse movement is carried out, what is necessary is that the gate has sufficiently solidified such that the blade **2** may be removed from the mould opening.

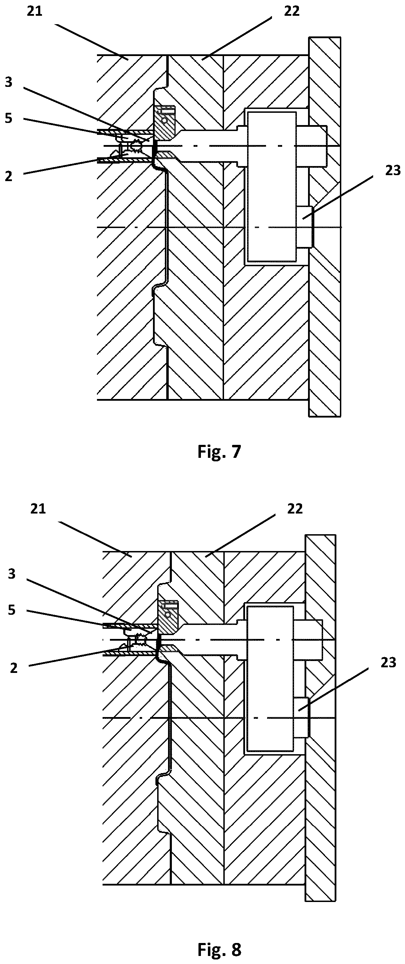

**Figure 7** illustrates of a cross-section of an embodiment of the device for automatically trimming injection gates placed in an injection mould having a first mould half **21** and a second mould half **22.** There is also a hot injection inlet **23.** The device is in the injection position: the blade **2** is away from the opening, letting the injection material enter through the injection opening, and the feeding slider **3** is arranged against the mould opening such that the runner inlet **4** establishes a fluid-tight channel into the mould.

**Figure 8** illustrates a cross-section of an embodiment of the device for automatically trimming injection gates placed in an injection mould - the injection is closed, and the device is in the injection position: the blade **3** is cutting the gate and closing the opening, and the feeding slider **3** is holding the blade **2** against the mould opening to maintain holding pressure by the blade **2.**

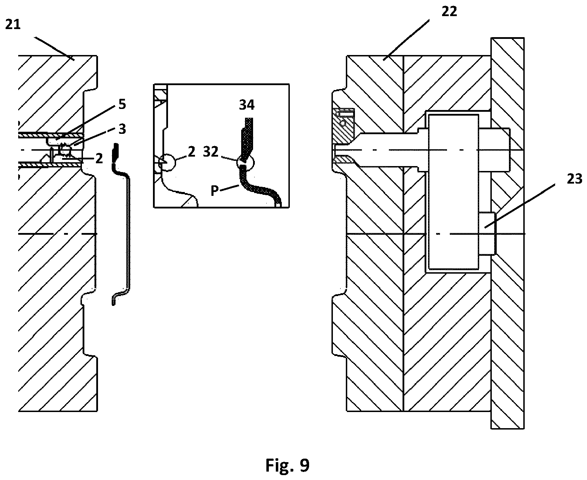

**Figure 9** illustrates a cross-section of an embodiment of the device for automatically trimming injection gates placed in an injection mould - the ejection of the part (referred as **p**) is done, and part and runner are separated. The injection material has been separated between part **p** and runner injection material **34** by a cut **32** performed by the blade **2.**

**Figures 7-9** also illustrate how the disclosed device is removable from the mould so that the device can be re-used in another mould.

## Claims

1. A device for automatically trimming an injection moulding gate of a moulded product being obtained by injection moulding in a mould, as a result of injecting melted injection material through an opening in said mould, comprising:
a casing (1) for attaching to the mould;
a blade (2) for trimming the gate, arranged to move substantially perpendicularly to the direction of melted material injection of said opening;
a feeding slider (3) comprising a runner inlet (4) forming a channel in said feeding slider (3);
**characterised by**
a movable locking bar (5) for locking and unlocking the feeding slider (3);
wherein the blade (2) is movable from an injection position (a) away from the opening to a cutting position (b), cutting the gate, and closing the opening;
wherein the feeding slider (3) is movable from an injection position, arranged against the mould opening such that the runner inlet (4) establishes a fluid-tight channel into the mould, to a cutting position, arranged to hold the blade (2) against the mould opening to maintain holding pressure by the blade (2);
wherein the locking bar (5) is movable from the injection position, held as a wedge between the casing (1) and the feeding slider (3) to lock the feeding slider (3) in position arranged against the mould opening such that the runner inlet (4) establishes a fluid-tight channel into the mould, to the cutting position, unlocking the feeding slider (3) to move away from the opening and holding feeding slider (3) to hold the blade (2) against the mould opening to maintain holding pressure by the blade (2).

2. The device for automatically trimming an injection moulding gate according to the previous claim, comprising a gear (6) meshing with the blade (2) and the feeding slider (3) to synchronise movement of the blade (2) and the feeding slider (3).

3. The device for automatically trimming an injection moulding gate according to any of the previous claims, wherein the feeding slider (3) is arranged to move substantially in parallel to the direction of melted material injection of said opening.

4. The device for automatically trimming an injection moulding gate according to any of the previous claims, wherein the blade (2) and the feeding slider (3) cooperate by way of respective cooperating sloped surfaces.

5. The device for automatically trimming an injection moulding gate according to the previous claim, wherein the blade (2) is arranged to move perpendicularly to the feeding slider (3).

6. The device for automatically trimming an injection moulding gate according to any of the claims 1-5, wherein the feeding slider (3) and the locking bar (5) cooperate by way of respective cooperating sloped surfaces.

7. The device for automatically trimming an injection moulding gate according to any of the previous claims, wherein the movable locking bar (5) is arranged to arranged to move in parallel and in reciprocal motion to the blade (2).

8. The device for automatically trimming an injection moulding gate according to any of the previous claims, wherein the runner inlet (4) is a recess in a surface of the feeding slider (3) such that it forms a fluid-tight channel in said feeding slider (3) when a feeding channel is connected to said recess.

9. The device for automatically trimming an injection moulding gate according to any of the previous claims, wherein the feeding slider (3) is movable from an injection position, arranged against the mould opening such that the runner inlet (4) establishes a fluid-tight channel into the mould, to a cutting position, arranged to hold the blade (2) against the mould opening to maintain holding pressure by the blade (2).

10. The device for automatically trimming an injection moulding gate according to any of the previous claims, comprising an actuator for moving the blade (2) from the injecting position into the cutting position.

11. The device for automatically trimming an injection moulding gate according to any of the previous claims, comprising a gear (9) meshing with the blade (2) and locking bar (5), but not the feeding slider (3), to synchronise movement of the blade (2) and the locking bar (5).

12. The device for automatically trimming an injection moulding gate according to any of the previous claims, comprising a hydraulic cylinder (10) and a piston (11) arranged to move the locking bar (5).

13. The device for automatically trimming an injection moulding gate according to any of the previous claims wherein the blade (2), the feeding slider (3) and the movable locking bar (5) are arranged to be movable bi-directionally between the injecting position and the cutting position.

14. Method of operating a device for automatically trimming an injection moulding gate according to any of the previous claims, comprising the steps of:
previously, arranging the device against a mould opening and arranging a feeding channel into the runner inlet (4) of the feeding slider (3), wherein the blade (2) is moved away from the mould opening, and simultaneously, or previously, the feeding slider (3) is moved against the mould opening, such that the runner inlet (4) establishes a fluid-tight channel from the feeding channel through the mould opening and into the mould;
injecting melted polymer into the mould cavity via the runner inlet 4 of the feeding slider (3);
optionally, allowing injecting pressure to ease to a lower pressure than the injection pressure;
moving the blade (2) into cutting position, and simultaneously, or previously, moving the feeding slider (3) from the mould opening, such that the feeding slider (3) holds the blade (2) against the mould opening, and thus maintaining holding pressure until the moulded product solidifies;
optionally, returning to injection pressure, if the pressure was previously eased from the injection pressure;
allowing the mould to cool and the moulded product to solidify;
opening the mould and extracting the moulded product.

15. Method according to the previous claim comprising moving the blade (2) into the cutting position when the moulded product has partially solidified such that the blade movement is not impaired and the melted material pressure has reduced due to the partial solidifying, for reducing the risk of leakage.

## Patentansprüche

1. Eine Vorrichtung zum automatischen Beschneiden eines Anspritzanschnitts eines durch Spritzguss in eine Form erhaltenen Formteils, als Ergebnis des Einspritzens von geschmolzenem Spritzgussmaterial durch eine Öffnung in die genannte Form, umfassend:
ein Gehäuse (1) zum Anbringen an der Form;
eine Schneide (2) zum Beschneiden des Anschnitts, die so angeordnet ist, dass sie sich im Wesentlichen senkrecht zur Einspritzrichtung des geschmolzenen Materials in die genannte Öffnung bewegt;
einen Zuführschieber (3) mit einem Kanaleingang (4), der einen Kanal in dem genannten Zuführschieber (3) bildet;
**gekennzeichnet durch** eine bewegliche Riegelstange (5) zum Verriegeln und Entriegeln des Zuführschiebers (3);
wobei die Schneide (2) von einer Einspritzposition (a) weg von der Öffnung in eine Schneideposition (b) bewegt werden kann, um den Anschnitt abzuschneiden und die Öffnung zu verschließen;
wobei der Zuführschieber (3) von einer Einspritzposition, die gegen die Öffnung der Form angeordnet ist, so dass der Kanaleingang (4) einen flüssigkeitsdichten Kanal in die Form bildet, in eine Schneideposition bewegbar ist, die so angeordnet ist, dass die Schneide (2) gegen die Öffnung der Form gehalten wird, um den Haltedruck durch die Schneide (2) aufrecht zu erhalten;
wobei die Riegelstange (5) von der Einspritzposition, die als Keil zwischen dem Gehäuse (1) und dem Zuführschieber (3) gehalten wird, um den Zuführschieber (3) in einer Position zu verriegeln, die gegen die Öffnung der Form angeordnet ist, so dass der Kanaleingang (4) einen flüssigkeitsdichten Kanal in die Form bildet, in die Schneideposition bewegt werden kann, wobei der Zuführschieber (3) entriegelt wird, um sich von der Öffnung weg zu bewegen und um den Zuführschieber (3) so zu halten, dass die Schneide (2) gegen die Öffnung der Form gehalten wird, um den Haltedruck durch die Schneide (2) aufrecht zu erhalten.

2. Die Vorrichtung zum automatischen Beschneiden eines Anspritzanschnitts nach dem vorangehenden Anspruch, umfassend ein Getriebe (6), das in die Schneide (2) und den Zuführschieber (3) eingreift, um die Bewegung der Schneide (2) und des Zuführschiebers (3) zu synchronisieren.

3. Die Vorrichtung zum automatischen Beschneiden eines Anspritzanschnitts nach einem der vorangehenden Ansprüche, wobei der Zuführschieber (3) so angeordnet ist, dass er sich im Wesentlichen parallel zur Einspritzrichtung des geschmolzenen Materials in die genannte Öffnung bewegt.

4. Die Vorrichtung zum automatischen Beschneiden eines Anspritzanschnitts nach einem der vorangehenden Ansprüche, wobei die Schneide (2) und der Zuführschieber (3) über jeweils zusammenwirkende schräge Flächen zusammenwirken.

5. Die Vorrichtung zum automatischen Beschneiden eines Anspritzanschnitts nach dem vorangehenden Anspruch, wobei die Schneide (2) so angeordnet ist, dass sie sich senkrecht zum Zuführschieber (3) bewegt.

6. Die Vorrichtung zum automatischen Beschneiden eines Anspritzanschnitts nach einem der Ansprüche 1-5, wobei der Zuführschieber (3) und die Riegelstange (5) über jeweils zusammenwirkende schräge Flächen zusammenwirken.

7. Die Vorrichtung zum automatischen Beschneiden eines Anspritzanschnitts nach einem der vorangehenden Ansprüche, wobei die bewegliche Riegelstange (5) so angeordnet ist, dass sie sich parallel zur der Schneide (2) hin und her bewegt.

8. Die Vorrichtung zum automatischen Beschneiden eines Anspritzanschnitts nach einem der vorangehenden Ansprüche, wobei der Kanaleingang (4) eine Aussparung in einer Oberfläche des Zuführschiebers (3) ist, so dass er einen flüssigkeitsdichten Kanal in dem genannten Zuführschieber (3) bildet, wenn ein Zuführkanal mit der genannte Aussparung verbunden ist.

9. Die Vorrichtung zum automatischen Beschneiden eines Anspritzanschnitts nach einem der vorangehenden Ansprüche, wobei der Zuführschieber (3) aus einer Einspritzposition, die so an der Öffnung der Form angeordnet ist, dass der Kanaleingang (4) einen flüssigkeitsdichten Kanal in die Form bildet, in eine Schneideposition bewegbar ist, die so angeordnet ist, dass die Schneide (2) gegen die Öffnung der Form gehalten wird, um den Haltedruck durch die Schneide (2) aufrecht zu erhalten.

10. Die Vorrichtung zum automatischen Beschneiden eines Anspritzanschnitts nach einem der vorangehenden Ansprüche, umfassend einen Aktuator zum Bewegen der Schneide (2) von der Einspritzposition in die Schneideposition.

11. Die Vorrichtung zum automatischen Beschneiden eines Anspritzanschnitts nach einem der vorangehenden Ansprüche, umfassend ein Getriebe (9), das in die Schneide (2) und die Riegelstange (5), jedoch nicht in den Zuführschieber (3) eingreift, um die Bewegung der Schneide (2) und der Riegelstange (5) zu synchronisieren.

12. Die Vorrichtung zum automatischen Beschneiden eines Anspritzanschnitts nach einem der vorangehenden Ansprüche, umfassend ein Hydraulikzylinder (10) und einen Kolben (11), die so angeordnet sind, dass sie die Riegelstange (5) bewegen.

13. Die Vorrichtung zum automatischen Beschneiden eines Anspritzanschnitts nach einem der vorangehenden Ansprüche, wobei die Schneide (2), der Zuführschieber (3) und die bewegliche Riegelstange (5), so angeordnet sind, dass sie bidirektional zwischen der Einspritzposition und der Schneideposition bewegbar sind.

14. Verfahren zum Betrieb einer Vorrichtung zum automatischen Beschneiden eines Anspritzanschnitts nach einem der vorangehenden Ansprüche, dass die folgenden Schritte umfasst:
vorheriges Anordnen der Vorrichtung gegen eine Öffnung der Form und Anordnen eines Zuführkanals in den Kanaleingang (4) des Zuführschiebers (3), wobei die Schneide (2) von der Öffnung der Form wegbewegt wird und gleichzeitig oder vorher der Zuführschieber (3) gegen die Öffnung der Form bewegt wird, so dass der Kanaleingang (4) einen flüssigkeitsdichten Kanal von dem Zuführkanal durch die Öffnung der Form und in die Form bildet;
Einspritzen von geschmolzenem Polymer in das Formnest über den Kanaleingang (4) des Zuführschiebers (3);
Gegebenenfalls das Absenken des Einspritzdruck auf einen niedrigeren Druck als den Einspritzdruck;
Bewegen der Schneide (2) in die Schneideposition und gleichzeitiges oder vorheriges Bewegen des Zuführschiebers (3) von der Öffnung der Form, so dass der Zuführschieber (3) die Schneide (2) gegen die Öffnung der Form hält und damit den Nachdruck aufrecht erhält, bis das geformte Produkt ausgehärtet ist;
Gegebenenfalls Rückkehr zum Einspritzdruck, wenn der Druck vorher unter den Einspritzdruck abgesenkt wurde;
Abkühlen der Form und Aushärten des geformten Produkts;
Öffnen der Form und Entnahme des geformten Produkts.

15. Verfahren nach dem vorangehenden Anspruch, umfassend das Bewegen der Schneide (2) in die Schneideposition, wenn das geformte Produkt teilweise ausgehärtet ist, so dass die Bewegung der Schneide nicht beeinträchtigt wird und der Druck des geschmolzenen Materials aufgrund der teilweisen Aushärtung abgenommen hat, um die Gefahr einer Leckage zu verringern.

## Revendications

1. Un dispositif d'ajustage automatique d'une porte de moulage par injection d'un produit moulé étant obtenu par moulage à injection dans un moule, en résultat de l'injection de matériau d'injection fondu à travers une ouverture dans ledit moule, comprenant :
un boîtier (1) à fixer au moule ;
une lame (2) pour ajuster la porte, arrangée pour se mouvoir de manière substantiellement perpendiculaire à la direction de l'injection de matériau fondu de ladite ouverture ;
un coulisseau d'alimentation (3) comprenant une entrée de canal (4) formant un canal dans ledit coulisseau d'alimentation (3) ;
**caractérisé par** une barre de verrouillage mobile (5) pour verrouiller et déverrouiller le coulisseau d'alimentation (3) ;
dans lequel la lame (2) peut passer d'une position d'injection (a) éloignée de l'ouverture vers une position de coupe (b), coupant la porte et fermant l'ouverture ;
dans lequel le coulisseau d'alimentation (3) peut passer d'une position d'injection, arrangée contre l'ouverture de moule telle que l'entrée de canal (4) établisse un canal étanche aux fluides vers l'intérieur du moule, à une position de coupe, arrangée pour tenir la lame (2) contre l'ouverture du moule pour maintenir la pression exercée par la lame (2) ;
dans lequel la barre de verrouillage (5) peut passer de la position d'injection, tenue en tant que cale entre le boîtier (1) et le coulisseau d'alimentation (3) pour verrouiller le coulisseau d'alimentation (3) dans une position arrangée contre l'ouverture du moule tel que l'entrée de canal (4) établisse un canal étanche aux fluides vers l'intérieur du moule, à la position de coupe, déverrouillant le coulisseau d'alimentation (3) pour qu'il s'éloigne de l'ouverture et maintenant le coulisseau d'alimentation (3) pour tenir la lame (2) contre l'ouverture du moule pour maintenir la pression exercée par la lame (2).

2. Le dispositif d'ajustage automatique d'une porte de moulage par injection selon la revendication précédente, comprenant un engrenage (6) s'engrenant avec la lame (2) et le coulisseau d'alimentation (3) pour synchroniser le mouvement de la lame (2) et le coulisseau d'alimentation (3).

3. Le dispositif d'ajustage automatique d'une porte de moulage par injection selon l'une quelconque des revendications précédentes, dans lequel le coulisseau d'alimentation (3) est arrangé pour se mouvoir de manière substantiellement parallèle à la direction d'injection de matériau fondu de ladite ouverture.

4. Le dispositif d'ajustage automatique d'une porte de moulage par injection selon l'une quelconque des revendications précédentes, dans lequel la lame (2) et le coulisseau d'alimentation (3) coopèrent à travers des surfaces inclinées coopérantes respectives.

5. Le dispositif d'ajustage automatique d'une porte de moulage par injection selon la revendication précédente, dans lequel la lame (2) est arrangée pour se mouvoir perpendiculairement au coulisseau d'alimentation (3).

6. Le dispositif d'ajustage automatique d'une porte de moulage par injection selon l'une quelconque des revendications 1-5, dans lequel le coulisseau d'alimentation (3) et la barre de verrouillage (5) coopèrent à travers des surfaces inclinées coopérantes respectives.

7. Le dispositif d'ajustage automatique d'une porte de moulage par injection selon l'une quelconque des revendications précédentes, dans lequel la barre de verrouillage mobile (5) est arrangée pour se mouvoir parallèlement et en un mouvement réciproque à celui de la lame (2).

8. Le dispositif d'ajustage automatique d'une porte de moulage par injection selon l'une quelconque des revendications précédentes, dans lequel l'entrée de canal (4) est un renfoncement dans une surface du coulisseau d'alimentation (3) telle qu'elle forme un canal étanche aux fluides dans ledit coulisseau d'alimentation (3) lorsqu'un canal d'alimentation est connecté audit renfoncement.

9. Le dispositif d'ajustage automatique d'une porte de moulage par injection selon l'une quelconque des revendications précédentes, dans lequel le coulisseau d'alimentation (3) peut passer d'une position d'injection, arrangée contre l'ouverture de moule telle que l'entrée de canal (4) établisse un canal étanche aux fluides vers l'intérieur du moule, à une position de coupe, arrangée pour tenir la lame (2) contre l'ouverture du moule pour maintenir la pression exercée par la lame (2).

10. Le dispositif d'ajustage automatique d'une porte de moulage par injection selon l'une quelconque des revendications précédentes, comprenant un actionneur pour mouvoir la lame (2) de la position d'injection à la position de coupe.

11. Le dispositif d'ajustage automatique d'une porte de moulage par injection selon l'une quelconque des revendications précédentes, comprenant un engrenage (9) s'engrenant avec la lame (2) et la barre de verrouillage (5), mais pas le coulisseau d'alimentation (3), pour synchroniser le mouvement de la lame (2) et la barre de verrouillage (5).

12. Le dispositif d'ajustage automatique d'une porte de moulage par injection selon l'une quelconque des revendications précédentes, comprenant un cylindre hydraulique (10) et un piston (11) arrangés pour mouvoir la barre de verrouillage (5).

13. Le dispositif d'ajustage automatique d'une porte de moulage par injection selon l'une quelconque des revendications précédentes dans lequel la lame (2), le coulisseau d'alimentation (3) et la barre de verrouillage mobile (5) sont arrangés pour être mûs de manière bidirectionnelle entre la position d'injection et la position de coupe.

14. Procédé d'opération d'un dispositif d'ajustage automatique d'une porte de moulage par injection selon l'une quelconque des revendications précédentes, comprenant les étapes de :
préalablement, arranger le dispositif contre une ouverture du moule et arranger un canal d'alimentation vers l'intérieur de l'entrée de canal (4) du coulisseau d'alimentation (3), dans lequel la lame (2) est éloignée de l'ouverture de moule, et simultanément, ou préalablement, le coulisseau d'alimentation (3) est mû contre l'ouverture du moule, tel que l'entrée de canal (4) établisse un canal étanche aux fluides partant du canal d'alimentation à travers l'ouverture du moule et vers l'intérieur du moule ;
injecter de polymère fondu dans la cavité du moule à travers l'entrée de canal (4) du coulisseau d'alimentation (3) ;
facultativement, permettre d'injecter de la pression pour atteindre une pression plus basse que la pression d'injection ;
mouvoir la lame (2) vers la position de coupe, et simultanément, ou préalablement, éloigner le coulisseau d'alimentation (3) de l'ouverture du moule, tel que le coulisseau d'alimentation (3) tienne la lame (2) contre l'ouverture du moule, maintenant ainsi la pression jusqu'à ce que le produit moulé se solidifie ;
facultativement, rétablir la pression d'injection, si la pression a été préalablement diminuée par rapport à la pression d'injection ;
laisser le moule refroidir et le produit moulé se solidifier ;
ouvrir le moule et extraire le produit moulé.

15. Procédé selon la revendication précédente, comprenant l'étape de mouvoir la lame (2) vers la position de coupe lorsque le produit moulé est partiellement solidifié tel que le mouvement de la lame ne soit pas diminué et que la pression du matériau fondu soit réduite dû à la solidification partielle, pour réduire le risque de fuites.
